# EUROPÄISCHE PATENTSCHRIFT

(11) **EP 2 509 820 B1**
(45) Veröffentlichungstag und Bekanntmachung des Hinweises auf die Patenterteilung: **11.09.2013**
(21) Anmeldenummer: 10784708.9
(22) Anmeldetag: 25.11.2010
(51) Int. Cl.: B60N 2/22, B60N 2/68, B60N 2/225, B60N 2/235

(54) **FAHRZEUGSITZ, INSBESONDERE KRAFTFAHRZEUGSITZ**
VEHICLE SEAT, ESPECIALLY MOTOR VEHICLE SEAT
SIEGE DE VEHICULE, NOTAMMENT SIEGE DE VEHICULE AUTOMOBILE

(30) Priorität: 09.12.2009 DE 102009057928
(43) Veröffentlichungstag der Anmeldung: 17.10.2012
(73) Patentinhaber: Keiper GmbH & Co. KG, 67657 Kaiserslautern (DE)
(72) Erfinder: FISCHER, Georg, 67722 Winnweiler (DE); SCHÄFER, volker, 67731 Otterbach (DE); FRANZMANN, Günter, 67806 Rockenhausen (DE); LIBORIUS, Werner, 66879 Niedermohr (DE); KRAMM, Lars, 67705 Trippstadt (DE); WOLSIEFER, harald, 67706 Krickenbach (DE)
(74) Vertreter: Liedhegener, Ralf
(86) Internationale Anmeldenummer: PCT/EP2010/007160
(87) Internationale Veröffentlichungsnummer: WO 2011/069604

(56) Entgegenhaltungen:
- DE-A1-102008 061 691
- DE-A1-102009 013 881
- DE-B4- 10 105 282
- JP-A- 58 101 316
- US-A- 3 401 979

## Beschreibung

Die Erfindung betrifft einen Fahrzeugsitz gemäß dem Oberbegriff des Anspruchs 1.

Aus der DE 101 05 282 B4 ist ein Fahrzeugsitz dieser Art bekannt, dessen als Lehneneinsteller dienenden Beschläge an Adaptern als Strukturteilen befestigt sind. Ein weiterer Fahrzeugsitz dieser Art ist aus der DE 20 2005 007 198 U1 bekannt, dessen als Lehnenseitenholm dienendes Strukturteil am oberen Ende eine geringere Materialstärke aufweist, die zum unteren Ende hin anwächst.

Die US 3,401,979 A offenbart einen an einem Strukturteil befestigten Beschlag mit zwei relativ zueinander verdrehbaren Beschlagteilen. Eines der beiden Beschlagteile weist eine Verstärkungsgeometrie auf, die das Strukturteil verstärkt. Die Verstärkungsgeometrie ist einteilig an dem Beschlagteil ausgebildet. Das Strukturteil nimmt wesentliche Beschlagbauteile, insbesondere dessen zentrale Lagerstelle, in einer topfförmigen Vertiefung auf und ist mittels einer Nietverbindung mit dem Beschlagteil und dessen Verstärkungsgeometrie verbunden. Dadurch dass die Verstärkungsgeometrie einstückig mit dem Beschlagteil ausgebildet ist, kann kein Toleranzausgleich zwischen diesen beiden Bauteilen erfolgen. Der Beschlag und die Strukturbauteile sind daher mit sehr geringen Toleranzen herzustellen, was zu hohen Fertigungskosten führt.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Das Strukturteil, an dem der Beschlag zu befestigen ist, kann ein beliebiger Bestandteil der Struktur des Fahrzeugsitzes sein, beispielsweise ein Lehnen-Seitenholm, ein Sitzrahmen-Seitenteil oder ein Adapter, der speziell für die Verbindung der Struktur mit dem Beschlag ausgebildet ist und an der Struktur befestigt wird. Der Beschlag kann ein beliebiger Einsteller des Fahrzeugsitzes sein, beispielsweise ein Lehneneinsteller oder ein Sitzneigungseinsteller, gegebenenfalls auch ein Sitzhöheneinsteller. Der Begriff "Beschlag" soll aber auch alle anderen möglichen Getriebe- und Verriegelungsgelenke und sonstigen Gelenke umfassen. Hinsichtlich des inneren Aufbau, der für die vorliegende Erfindung unerheblich ist, kann der Beschlag beispielsweise ein Getriebebeschlag oder ein Rastbeschlag sein. Um die beiden Beschlagteile relativ zueinander zu verdrehen, wird der Beschlag entsprechend angetrieben oder entriegelt. Die Erfindung ist insbesondere dann geeignet, wenn die äußere Gestalt des Beschlags eine Scheibenform ist, die wenige Befestigungsmöglichkeiten bietet. Die Befestigung erfolgt vorzugsweise mittels einer Schweißnaht, worunter beliebige Geometrien und Schweißarten, beispielsweise Laserschweißnähte, MAG-Schweißraupen oder einzelne Widerstandsschweißpunkte, verstanden werden sollen.

Indem der Befestigungsbereich gegenüber den anderen Bereichen des Strukturteils durch weiteres Material, nämlich ein separat vom Strukturteil und Beschlag ausgebildetes Zusatzteil versteift ist, wird die Materialstärke nur kleinflächig erhöht, nämlich im Befestigungsbereich. Gegenüber einer weitgehend gleichbleibenden, geringen Materialstärke wird die Festigkeit erhöht, insbesondere können höhere Momente übertragen werden, während gegenüber einer durchgehend gleichen, hohen Materialstärke bei vergleichbaren Festigkeitseigenschaften Gewicht und Kosten eingespart werden. Insbesondere im Crashfall können die vom Beschlag eingeleiteten oder in den Beschlag weiterzuleitenden Kräfte besser aufgenommen und weitergeleitet werden. Das Zusatzteil wird separat vom Strukturteil ausgebildet und mit diesem (und mit dem Beschlag) fest verbunden.

Im Strukturteil und im Zusatzteil sind Öffnungen vorgesehen, deren Durchmesser gleich oder leicht unterschiedlich sein können. Die leicht unterschiedlichen Durchmesser der Öffnungen erleichtern die Einhaltung von Toleranzen, indem die erste Öffnung im Strukturteil mit größeren Toleranzen hergestellt werden darf, und durch die relative Positionierung ein schwimmender Toleranzausgleich erfolgt.

Bei der Verwendung des Strukturteils als Lehnenseitenteil ist es mit dem erfindungsgemäßen Zusatzteil möglich, die Materialstärke des Strukturteils (und damit das Gewicht) zu reduzieren, da die Schubkräfte im Material mit größer werdendem Abstand zur Achse (also zur Schwenkachse der Lehne), d.h. einem größeren Durchmesser der zweiten Schweißnaht im Vergleich zur ersten Schweißnaht, geringer werden. Alternativ zur Materialstärkenreduzierung kann auch die Materialgüte des Strukturteils reduziert werden. Eine Tropfenform des Zusatzteils erlaubt eine gezielte Vergrößerung der Versteifung in der Hauptlastrichtung. Zudem können weitere Funktionen in das Zusatzteil integriert werden, beispielsweise die Ausbildung eines Anschlags oder die Abstützung einer Lehnenkompensationsfeder.

Sofern für den Beschlag verschiedene Lastklassen (und damit verschiedene Abmessungen) existieren, reicht ein entsprechend angepasstes Zusatzteil aus, während das Strukturteil ein Gleichteil sein kann.

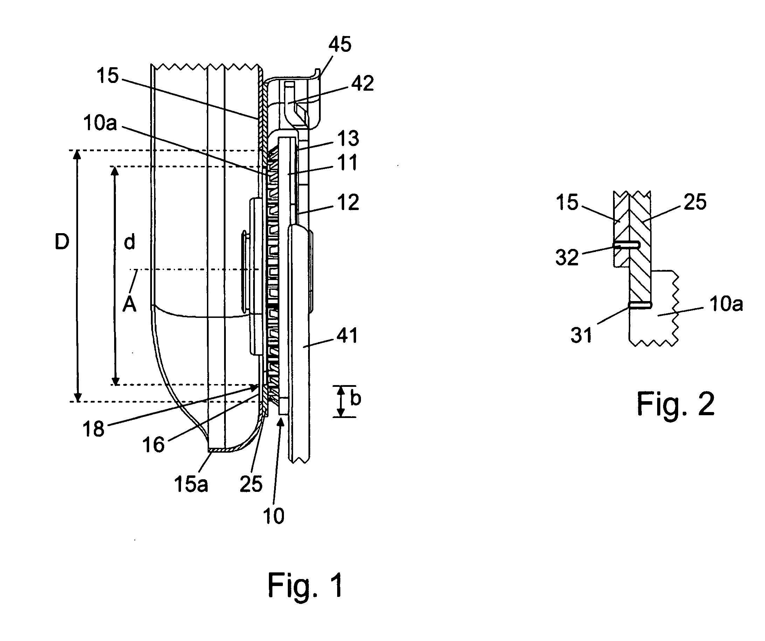

Im Folgenden ist die Erfindung anhand eines in der Zeichnung dargestellten Ausführungsbeispiels mit einer Abwandlung näher erläutert. Es zeigen
- Fig. 1: eine teilweise geschnittene Ansicht von Beschlag, Strukturteil und Zusatzteil,
- Fig. 2: einen vergrößerten Teil von Fig. 1,

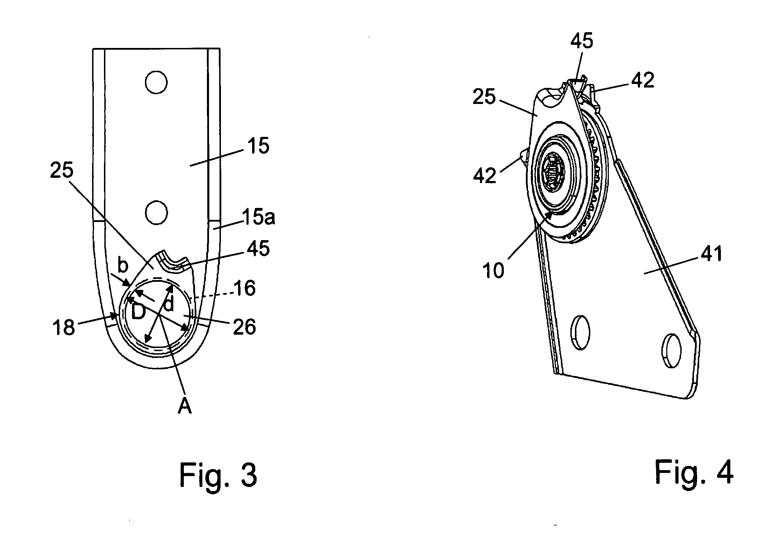

- Fig. 3: eine Seitenansicht des Strukturteils mit Zusatzteil,
- Fig. 4: eine perspektivische Ansicht einer Baugruppe aus Beschlag, Zusatzteil und einem Adapter,
- Fig. 5: eine perspektivische Ansicht einer Abwandlung, und
- Fig. 6: eine schematische Seitenansicht eines Fahrzeugsitzes.

Ein Fahrzeugsitz 1 für ein Kraftfahrzeug weist ein Sitzteil 3, eine Lehne 4, welche mittels je eines Beschlags 10 auf beiden Fahrzeugsitzseiten am Sitzteil 3 angebracht und relativ zu diesem neigungseinstellbar und/oder freischwenkbar ist, auf. Die Beschläge 10 sind vorliegend als Getriebebeschläge mit einem selbsthemmenden Exzenterumlaufgetriebe ausgebildet, wie es in der DE 20 2009 017 811 U1 oder der DE 44 36 101 A1 beschrieben ist. Hinsichtlich ihrer äußeren Gestalt weisen die Beschläge 10 eine Scheibenform auf, wie sie beispielsweise in der DE 20 2009 017 811 U 1 oder in der US 6,799,806 A beschrieben ist. Alternativ sind die Beschläge 10 als Rastbeschläge mit gleicher äußerer Gestalt ausgebildet, aber einem inneren Aufbau, wie er beispielsweise in der WO 00/44582 A1 beschrieben ist. Der innere Aufbau der Beschläge 10 kann jedoch von diesen bekannten Beschlägen abweichen. Es ist auch möglich, einen einzigen Beschlag 10 auf einer Fahrzeugsitzseite mit einem Gelenk auf der anderen Fahrzeugsitzseite zu kombinieren.

Die beiden Beschläge 10 stehen mittels einer profilierten Übertragungsstange miteinander in Getriebeverbindung. Die Übertragungsstange ist horizontal und quer zur Fahrtrichtung angeordnet und um ihre eigene Achse A drehbar, deren genaue Position durch die Beschläge 10 definiert ist. Ein drehfest auf der Übertragungsstange sitzender Handrad (oder Handhebel) dient der manuellen Betätigung der Beschläge 10. Im Falle von Getriebebeschlägen ist auch eine motorische Betätigung möglich. Die nachfolgenden Richtungsangaben beziehen sich auf das Zylinderkoordinatensystem, welches durch die Achse A definiert ist.

Jeder Beschlag 10 weist ein erstes Beschlagteil 11 und ein zweites Beschlagteil 12 auf, welche relativ zueinander verdrehbar sind, indem die Drehung der Übertragungsstange den Beschlag 10 antreibt (im Falle des Getriebebeschlags) oder entriegelt (im Falle des Rastbeschlags). Die beiden Beschlagteile 11 und 12 lassen jeweils näherungsweise in eine kreisrunde Scheibenform einbeschreiben. Zur Aufnahme der axial wirkenden Kräfte, also zum axialen Zusammenhalt der Beschlagteile 11 und 12, ist ein Umklammerungsring 13 vorgesehen. In baulicher Hinsicht bilden die beiden Beschlagteile 11 und 12 daher zusammen (mit dem Umklammerungsring 13) eine scheibenförmige Einheit.

Die Scheibenform bietet zwar den Vorteil einer kompakten Bauform, stellt jedoch genau deshalb, nämlich wegen der geringen zur Verfügung stehenden Flächen, besondere Herausforderungen an die Technik der Anbringung des Beschlags an die Strukturen von Sitzteil 3 und Lehne 4. Beispielhaft ist die Anbringung des Beschlags 10 an ein Strukturteil 15 beschrieben, welches ein integraler Teilbereich der Struktur der Lehne 4 ist.

Am Strukturteil 15 ist eine - wenigstens näherungsweise kreiszylindrische - erste Öffnung 16 ausgebildet, welche von einem Befestigungsbereich 18 ringförmig (oder bogenförmig) umgeben wird. Die erste Öffnung 16 kann auch eine andere Geometrie aufweisen, beispielsweise eine Sternform oder eine andere Form mit zyklischer Symmetrie bezüglich der Achse A. Für die Ausbildung der Öffnung 16 wird ausgehend von einem Blech in einem vorbereitenden Schritt ein Rohling für das Strukturteil 15 ausgestanzt und optional der Außenrand 15a des Strukturteils 15 erzeugt, beispielsweise ein - gegebenenfalls im gleichen Arbeitsgang - um ca. 90° umgebogener Rand. Gleichzeitig oder in einem späteren Schritt wird innerhalb eines im Wesentlichen ebenen, kreisförmigen Bereichs, der (um beispielsweise zwei Materialstärken) in die gleiche Richtung wie der Außenrand 15a erhaben sein kann, ein zentraler Bereich als erste Öffnung 16 ausgestanzt. Die Ringform (oder Bogenform) des Befestigungsbereichs 18 definiert eine radiale Breite b (beispielsweise 4 mm), welcher deutlich kleiner ist als der erste Durchmesser D (beispielsweise 60 mm) der ersten Öffnung 16. Für Geometrien der ersten Öffnung 16, welche von der Kreisform abweichen, soll der erste Durchmesser D derjenige des Kreises mit gleichem Flächeninhalt sein.

Das Strukturteil 15 kann auch ein integraler Teilbereich der Struktur des Sitzteils 3 oder ein separater, mit der Struktur der Lehne 4 oder des Sitzteils 3 verbundener Adapter sein. Die Anwendung der Erfindung ist nicht auf die Anbindung eines Beschlages 10 an Sitzteil 3 und Lehne 4 begrenzt. Vielmehr lässt sie sich auf alle dem Fachmann bekannten Anbindungsfälle von Beschlägen und Komponenten an Strukturbauteilen anwenden. So kann beispielsweise auf gleiche Weise das Anbringen eines Beschlages für einen Sitzhöheneinsteller erfolgen, wie er in der DE 10 2009 008 576 A1 beschrieben ist.

Für die Herstellung einer optimierten Verbindung zwischen dem Strukturteil 15 mit dem Beschlag 10 ist im Befestigungsbereich 18 weiteres Material angesammelt gegenüber den übrigen Bereichen des Strukturteils 15, um das Strukturteil 15 im lokalen Umfeld des Beschlags 10 zu versteifen. Das zusätzliche Material stammt vorliegend von einem Zusatzteil 25, welches separat mit einer zweiten Öffnung 26 ausgebildet wird, vorzugsweise vom gleichen Blech ausgestanzt wird. Der dadurch entstehende Befestigungsbereich 18, also das Zusatzteil 25 und der davon abgedeckte Bereich des Shukturteils 15, hat dann beispielsweise die doppelte Materialstärke wie das Strukturteil 15. Das Zusatzteil 25 hat vorzugsweise eine Tropfenform (mit einem spitzen Ende und einem stumpfen Ende), wobei das spitze Ende nach oben weist und den höher belastenden Teil des Befestigungsbereichs 18 versteift. Der radial abstehende Bereich des Zusatzteils 25, welcher das spitze Ende aufweist, ist bei der Definition der Breite b des Befestigungsbereichs 18 unberücksichtigt. Das Zusatzteil 25 kann alternativ ringförmig ausgebildet sein. Allgemein ist es mittels der Geometrieanpassung des Zusatzteils 25 möglich, das Strukturteil 15 im kritischen Teil des Befestigungsbereichs 18 gezielt zu verstärken. Damit können teure Halbzeuge, beispielsweise Tailored Blanks, vermieden werden.

Die zweite Öffnung 26 des Zusatzteils 25 hat vorzugsweise die gleiche Geometrie wie die erste Öffnung 16 des Strukturteils 15. Die zweite Öffnung 26 hat einen zweiten Durchmesser d. Für Geometrien der zweiten Öffnung 26, welche von der Kreisform abweichen, soll der zweite Durchmesser d derjenige des Kreises mit gleichem Flächeninhalt sein. Der zweite Durchmesser d (beispielsweise 52 mm) der zweite Öffnung 26 ist kleiner als der erste Durchmesser D der ersten Öffnung 16. Das "kleinere" Zusatzteil 25 und seine zweite Öffnung 26 können mit besserer Toleranz ausgebildet werden als die erste Öffnung 16 im "größeren" Strukturteil 15. Aufgrund ihres größeren Durchmessers D kann daher die erste Öffnung 16 auch geringfügig versetzt zur Achse A und/oder mit geringfügig abweichendem Durchmesser ausgebildet werden. Das Zusatzteil 25 ist am Strukturteil 15 so präzise angesetzt (schwimmender Toleranzausgleich), dass die zweite Öffnung 26 mit der Achse A - und je nach Toleranzlage auch mit der ersten Öffnung 16 - fluchtet (oder fluchten wird). In der Projektion umschließt die erste Öffnung 16 die zweite Öffnung 26 vorzugsweise vollständig. Das Strukturteil 15 ist mit den größeren Toleranzen kostengünstiger herstellbar.

Der Beschlag 10 ist mit einer eine Schulter 10a aufweisenden Stirnseite, vorliegend mit der vom zweiten Beschlagteil 12 abgewandten Stirnseite des ersten Beschlagteils 11, am Zusatzteil 25 angesetzt, wobei die Schulter 10a in die zweite Öffnung 26 eingeführt ist und der Beschlag 10 mit dem die Schulter 10a umrundenden Teil seiner Stirnfläche am Zusatzteil 25 anliegt. Vorzugsweise nimmt die zweite Öffnung 26 dann die Schulter 10a formschlüssig auf. Die erste Öffnung 16 nimmt den Beschlag 10 wenigstens teilweise auf.

Grundsätzlich sind mehrere gleichwertige Montagereihenfolgen denkbar. Bei der ersten Reihenfolge wird der Beschlag 10 an dem losen Zusatzteil 25 angesetzt (oder umgekehrt), indem das erste Beschlagteil 11 mit der Schulter 10a in die zweite Öffnung 26 eingeführt wird. Dann werden der Beschlag 10 und das Zusatzteil 25 mittels einer ersten Schweißnaht 31 miteinander fest verbunden. Die sicherheitsrelevante erste Schweißnaht 31 zum Beschlag 10 kann auf Standardschweißanlagen hergestellt werden. Die entstehende Baugruppe ist optimal zum Transport geeignet, da die Baugröße eine gute Schachtelung ermöglicht. Später wird diese Baugruppe am Strukturteil 15 angesetzt, und dann das Zusatzteil 25 mittels einer zweiten Schweißnaht 32 mit dem Strukturteil 15 fest verbunden. Alternativ zum Schweißen ist eine andere Anbindung denkbar, beispielsweise eine Verschraubung oder ein Aufstecken des Strukturteils 15, beispielsweise aus anderen Werkstoffen.

Bei der zweiten Reihenfolge wird das Zusatzteil 25 am Strukturteil 15 angesetzt und mittels der zweiten Schweißnaht 32 mit diesem fest verbunden. Anschließend wird der Beschlag 10 an dieser Baugruppe angesetzt, indem das erste Beschlagteil 11 mit der Schulter 10a in die zweite Öffnung 26 eingeführt wird. Dann werden der Beschlag 10 und das Zusatzteil 25 mittels der ersten Schweißnaht 31 miteinander fest verbunden. In einer Abwandlung hierzu können das Strukturteil 15 und das Zusatzteil 25 zunächst mittels Durchsetzfügen fixiert sein, was in den Stanzprozess integrierbar ist und später (nach oder zugleich mit der ersten Schweißnaht 31) durch die zweite Schweißnaht 32 ergänzt werden. Bei der dritten Reihenfolge werden Beschlag 10, Zusatzteil 25 und Strukturteil 15 relativ zueinander positioniert und dann durch die Schweißnähte 31 und 32 miteinander fest miteinander verbunden. Anstelle des Schweißens kann der Beschlag 10 auch auf andere Weise fest (d.h. unlösbar) mit dem Befestigungsbereich 18, d.h. dem Zusatzteil 25 und dem vom Zusatzteil 25 abgedeckten Bereich des Strukturteils 15, verbunden sein.

Die Schweißnähte 31 und 32 werden vorzugsweise durch Laserschweißen erzeugt werden. Die Schweißnähte 31 und 32 können auch durch andere Schweißarten, wie MAG-Schweißen, erzeugt werden. Sie können kreisförmig, kreisbogenförmig, punktförmig oder von anderer Geometrie sein. Das aufgrund seiner einfacheren Geometrie genauer gestanzte Zusatzteil 25 ermöglicht ein prozesssicheres Spaltschweißen. Das Seitenteil 15 wird mittels Durchschweißung am Zusatzteil 25 angebunden. Dadurch ist der Toleranzausgleich in der Anbindungsebene möglich. Die Anordnung der miteinander zu verschweißenden Bauteile ist so gewählt, dass das Strukturteil 15 die Funktionsflächen des Beschlags 10 abdeckt, so dass keine besondere Schweißabdeckung notwendig ist. Die zweite Schweißnaht 32 ist vorliegend nicht direkt am Beschlag 10 positioniert, so dass sie besonders gut durch (kostengünstiges) MAG-Schweißen ausgeführt werden kann, insbesondere wenn sie an einem anderen Herstellungsort als die erste Schweißnaht 31 erzeugt wird. In alternativer Anordnung kann die zweite Schweißnaht 32 so tief ausgebildet sein, dass sie bis zum Beschlag 10 reicht und damit zusätzlich zur (oder anstelle der) ersten Schweißnaht 31 den Beschlag 10 am Strukturteil 15 befestigt.

Die Verfahrensschritte müssen nicht in einzelnen Fertigungsschritten beziehungsweise Werkzeugen stattfinden. Je nach Werkzeugkonzept lassen sich mehrere Verfahrensschritte in einem Fertigungsschritt beziehungsweise einem Werkzeug realisieren.

In das Zusatzteil 25 können - außer der Verstärkung des Strukturteils 15 im Befestigungsbereich 18 und der Anbindung des Beschlags 10 - optional weitere Funktionen integriert werden. Zusätzliche Bauteile sind dann nicht notwendig. Mit einfachen Geometrieerweiterungen des Zusatzteils 25 ist eine Baukastenlösung realisierbar.

An dem von Zusatzteil 25 abgewandten Beschlagteil 11 oder 12 des Beschlags 10, vorliegend dem zweiten Beschlagteil 12, ist ein Adapter 41 befestigt, mittels dessen der Beschlag 10 vorliegend mit der Struktur des Sitzteils 3 verbunden ist. An diesem Adapter 41 sind vorzugsweise zwei Begrenzungsanschläge 42 ausgebildet, welche bezüglich der Achse A radial vom Adapter 41 abstehen. Am Zusatzteil 25 ist vorzugsweise ein Vorsprung 45 ausgebildet, vorzugsweise am spitzen Ende der Tropfenform, indem dieses spitze Ende bezüglich der Achse A in axialer Richtung abgewinkelt ist (so dass das spitze Ende nur noch näherungsweise spitz ist) und bis in die Ebene des Adapters 41 mit seinen Begrenzungsanschlägen 42 ragt. Der Vorsprung 45 ist in Umfangsrichtung der Achse A zwischen den beiden Begrenzungsanschlägen 42 angeordnet. Mittels Zusammenwirkens des als Anschlag fungierenden Vorsprungs 45 und der Begrenzungsanschläge 42 wird der Schwenkbereich der Lehne 4 für die Neigungseinstellung begrenzt. Der Kraftfluss der Anschlagbelastung erfolgt auf sehr kurzem Weg. Die Toleranzen der Anschlagposition können sehr genau eingestellt werden, wenn die zweite Öffnung 16 kreisförmig ist und dadurch einen Winkelausgleich vor dem Schweißen ermöglicht.

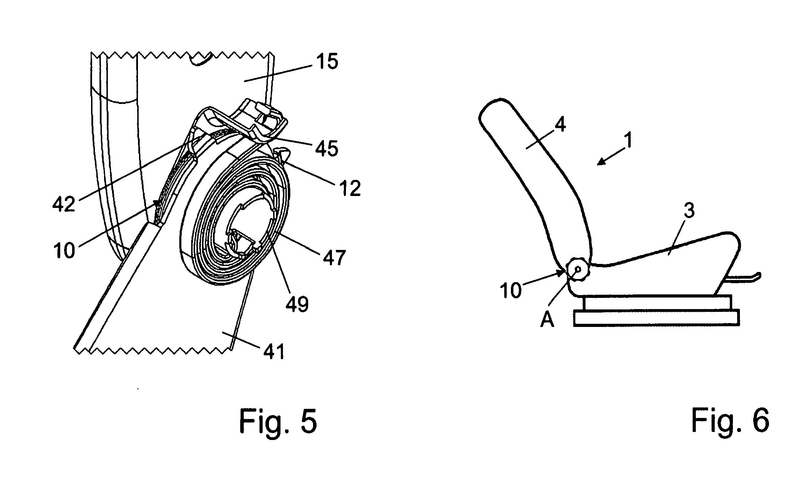

Der Vorsprung 45 des Zusatzteils 25 kann zusätzlich oder alternativ als Abstützung für eine Lehnenkompensationsfeder 47 ausgebildet sein, wie die Abwandlung in Fig. 5 zeigt. Die Lehnenkompensationsfeder 47 findet insbesondere Verwendung, wenn der Beschlag 10 als Rastbeschlag ausgebildet ist, um bei entriegeltem Beschlag 10 das Gewicht der Lehne 4 wenigstens teilweise zu kompensieren. Die Lehnenkompensationsfeder 47 kann aber theoretisch auch bei einem Getriebebeschlag verwendet werden. Vorzugsweise ist die Lehnenkompensationsfeder 47 als Spiralfeder ausgebildet, welche mit Vorspannung radial außen an dem Vorsprung 45 und radial innen an einer Buchse 49 abgestützt ist. Diese Buchse 49 kann am zweiten Beschlagteil 12 und/oder am Adapter 41 befestigt sein.

### Bezugszeichenliste

- 1: Fahrzeugsitz
- 3: Sitzteil
- 4: Lehne
- 10: Beschlag
- 10a: Schulter
- 11: erstes Beschlagteil
- 12: zweites Beschlagteil
- 13: Umklammerungsring
- 15: Strukturteil
- 15a: Außenrand
- 16: erste Öffnung
- 18: Befestigungsbereich
- 25: Zusatzteil
- 26: zweite Öffnung
- 31: erste Schweißnaht
- 32: zweite Schweißnaht
- 41: Adapter
- 42: Begrenzungsanschlag
- 45: Vorsprung
- 47: Lehnenkompensationsfeder
- 49: Buchse
- A: Achse
- b: radiale Breite (des Befestigungsbereichs)
- D: Durchmesser (der ersten Öffnung)
- d: Durchmesser (der zweiten Öffnung)

## Patentansprüche

1. Fahrzeugsitz, insbesondere Kraftfahrzeugsitz, mit wenigstens einem Beschlag (10), welcher zwei relativ zueinander verdrehbare Beschlagteile (11, 12) aufweist und welcher eine Achse (A) definiert, und wenigstens einem Strukturteil (15), welches wenigstens eine erste Öffnung (16) mit einem ersten Durchmesser (D) zur teilweisen Aufnahme des Beschlags (10) und wenigstens einen die erste Öffnung (16) umgebenden Befestigungsbereich (18) aufweist zur Befestigung des Beschlags (10),
**dadurch gekennzeichnet, dass**
der Befestigungsbereich (18) gegenüber den anderen Bereichen des Strukturteils (15) durch ein separat vom Strukturteil (15) und separat vom Beschlag (10) ausgebildetes Zusatzteil (25) versteift ist, welches eine zweite Öffnung (26) mit einem zweiten Durchmesser (d) aufweist und welches mit dem Strukturteil (15) fest verbunden ist, wobei der Beschlag (10) mit dem Zusatzteil (25) fest verbunden ist und wenigstens teilweise in die zweite Öffnung (26) eingeführt ist.

2. Fahrzeugsitz nach Anspruch 1, **dadurch gekennzeichnet, dass** der Durchmesser (d) der zweiten Öffnung (26) kleiner ist als der Durchmesser (D) der ersten Öffnung (16).

3. Fahrzeugsitz nach einem der vorhergehenden Ansprüche, **dadurch gekennzeichnet, dass** die zweite Öffnung (26) mit der Achse (A) fluchtet.

4. Fahrzeugsitz nach einem der vorhergehenden Ansprüche, **dadurch gekennzeichnet, dass** die erste Öffnung (16) die zweite Öffnung (26) in der Projektion vollständig umschließt, insbesondere mit der Achse (A) fluchtet.

5. Fahrzeugsitz nach einem der vorhergehenden Ansprüche, **dadurch gekennzeichnet, dass** der Beschlag (10) an einem der beiden Beschlagteile (11, 12) eine Schulter (10a) aufweist, welche innerhalb der zweiten Öffnung (26) angeordnet ist.

6. Fahrzeugsitz nach einem der vorhergehenden Ansprüche, **dadurch gekennzeichnet, dass** der Beschlag (10) mittels wenigstens einer ersten Schweißnaht (11) mit dem Befestigungsbereich (18), insbesondere dem Zusatzteil (25), fest verbunden ist.

7. Fahrzeugsitz nach einem der vorhergehenden Ansprüche, **dadurch gekennzeichnet, dass** das Zusatzteil (25) mittels wenigstens einer zweiten Schweißnaht (32) mit dem Strukturteil (15) fest verbunden ist.

8. Fahrzeugsitz nach einem der vorhergehenden Ansprüche, **dadurch gekennzeichnet, dass** das Zusatzteil (25) eine Tropfenform mit einem wenigstens näherungsweise spitzen Ende und einem stumpfen Ende aufweist.

9. Fahrzeugsitz nach einem der vorhergehenden Ansprüche, **dadurch gekennzeichnet, dass** das Zusatzteil (25) einen bezüglich der Achse (A) axial abstehenden Vorsprung (45) aufweist, welcher insbesondere an einem wenigstens näherungsweise spitzen Ende des insbesondere mit einer Tropfenform ausgebildeten Zusatzteils (25) ausgebildet ist.

10. Fahrzeugsitz nach Anspruch 9, **dadurch gekennzeichnet, dass** der Vorsprung (45) als Anschlag zum Zusammenwirken mit Begrenzungsanschlägen (42) und/oder als Abstützung für eine Lehnenkompensationsfeder (47) ausgebildet ist.

## Claims

1. Vehicle seat, in particular motor vehicle seat, comprising at least one fitting (10) which has two fitting parts (11, 12) which may be rotated relative to one another, and which defines an axis (A), and at least one structural part (15) which has at least one first opening (16) having a first diameter (D) for partially accommodating the fitting (10) and which has at least one fastening region (18) surrounding the first opening (16), for fastening the fitting (10), **characterized in that** the fastening region (18) is reinforced relative to the other regions of the structural part (15) by an additional part (25), which is formed separately from the structural part (15) and separately from the fitting (10) and which has a second opening (26) having a second diameter (d) and which is fixedly connected to the structural part (15), wherein the fitting (10) is fixedly connected to the additional part (25) and is at least partially inserted into the second opening (26).

2. Vehicle seat according to Claim 1, **characterized in that** the diameter (d) of the second opening (26) is smaller than the diameter (D) of the first opening (16).

3. Vehicle seat according to one of the preceding claims, **characterized in that** the second opening (26) is aligned with the axis (A).

4. Vehicle seat according to one of the preceding claims, **characterized in that** the first opening (16) fully encompasses the second opening (26) in the projection, in particular is aligned with the axis (A).

5. Vehicle seat according to one of the preceding claims, **characterized in that** the fitting (10) comprises on one of the two fitting parts (11, 12) a shoulder (10a) which is arranged inside the second opening (26).

6. Vehicle seat according to one of the preceding claims, **characterized in that** the fitting (10) is fixedly connected by means of at least one first welded seam (31) to the fastening region (18), in particular the additional part (25).

7. Vehicle seat according to one of the preceding claims, **characterized in that** the additional part (25) is fixedly connected to the structural part (15) by means of at least one second welded seam (32).

8. Vehicle seat according to one of the preceding claims, **characterized in that** the additional part (25) has a droplet shape with an at least approximately pointed end and a blunt end.

9. Vehicle seat according to one of the preceding claims, **characterized in that** the additional part (25) has a projection (45) protruding axially relative to the axis (A) which, in particular, at an at least approximately pointed end of the additional part (25) is configured to have, in particular, a droplet shape.

10. Vehicle seat according to Claim 9, **characterized in that** the projection (45) is configured as a stop for cooperating with limit stops (42) and/or as a support for a backrest compensation spring (47).

## Revendications

1. Siège de véhicule, notamment siège de véhicule automobile, comprenant au moins une ferrure (10), laquelle comprend deux parties de ferrure (11, 12) pouvant tourner l'une par rapport à l'autre et laquelle définit un axe (A), et comprenant au moins une partie structurale (15) qui comprend au moins une première ouverture (16) présentant un premier diamètre (D) pour recevoir partiellement la ferrure (10) et au moins une région de fixation (18) entourant la première ouverture (16), pour la fixation de la ferrure (10),
**caractérisé en ce que**
la région de fixation (18) est rigidifiée par rapport aux autres régions de la partie structurale (15) par une partie supplémentaire (25) réalisée séparément de la partie structurale (15) et séparément de la ferrure (10), laquelle partie supplémentaire comprend une deuxième ouverture (26) présentant un deuxième diamètre (d) et est reliée fixement à la partie structurale (15), la ferrure (10) étant reliée fixement à la partie supplémentaire (25) et étant insérée au moins partiellement dans la deuxième ouverture (26).

2. Siège de véhicule selon la revendication 1, **caractérisé en ce que** le diamètre (d) de la deuxième ouverture (26) est inférieur au diamètre (D) de la première ouverture (16).

3. Siège de véhicule selon l'une quelconque des revendications précédentes, **caractérisé en ce que** la deuxième ouverture (26) est en alignement avec l'axe (A).

4. Siège de véhicule selon l'une quelconque des revendications précédentes, **caractérisé en ce que** la première ouverture (16) entoure complètement la deuxième ouverture (26) en projection, en particulier est en alignement avec l'axe (A).

5. Siège de véhicule selon l'une quelconque des revendications précédentes, **caractérisé en ce que** la ferrure (10) comprend un épaulement (10a) sur l'une des deux parties de ferrure (11, 12), lequel est disposé à l'intérieur de la deuxième ouverture (26).

6. Siège de véhicule selon l'une quelconque des revendications précédentes, **caractérisé en ce que** la ferrure (10) est reliée fixement à la région de fixation (18), en particulier à la partie supplémentaire (25), au moyen d'au moins un premier joint de soudure (31).

7. Siège de véhicule selon l'une quelconque des revendications précédentes, **caractérisé en ce que** la partie supplémentaire (25) est reliée fixement à la partie structurale (15) au moyen d'au moins un deuxième joint de soudure (32).

8. Siège de véhicule selon l'une quelconque des revendications précédentes, **caractérisé en ce que** la partie supplémentaire (25) présente une forme de goutte dotée d'une extrémité au moins approximativement pointue et d'une extrémité épointée.

9. Siège de véhicule selon l'une quelconque des revendications précédentes, **caractérisé en ce que** la partie supplémentaire (25) comprend une saillie (45) faisant saillie axialement par rapport à l'axe (A), laquelle saillie est réalisée en particulier sur une extrémité au moins approximativement pointue de la partie supplémentaire (25) réalisée en particulier en forme de goutte.

10. Siège de véhicule selon la revendication 9, **caractérisé en ce que** la saillie (45) est réalisée sous forme de butée destinée à coopérer avec des butées de limitation (42) et/ou sous forme d'appui pour un ressort compensateur de dossier (47).
